# EUROPEAN PATENT APPLICATION

(11) **EP 4 579 449 A1**
(43) Date of publication of application: **02.07.2025**
(21) Application number: 22960082.0
(22) Date of filing: 29.09.2022
(51) Int. Cl.: G06F 9/445

(54) **METHOD AND APPARATUS FOR EXTENDING FUNCTION BLOCK CAPABILITY, ELECTRONIC DEVICE, AND STORAGE MEDIUM**

(71) Applicant: Siemens Ltd., China, Chaoyang District Beijing 100102 (CN)
(72) Inventor: LU, Ting, Suzhou, Jiangsu 215000 (CN); ZHOU, Zhen Hua, Shanghai 200120 (CN); QU, Yao, Nanjing, Jiangsu 211100 (CN); WANG, Ting, Suzhou, Jiangsu 215332 (CN)
(74) Representative: Isarpatent
(86) International application number: PCT/CN2022/122781
(87) International publication number: WO 2024/065445

(57) **Abstract**

Embodiments of the present invention disclose a method and an apparatus for extending a capability of a function block, an electronic device, and a storage medium. The method includes: determining a first description file of a first function block, the first description file including first information, and the first information being used for describing a calling relationship between the first function block and an extended capability in a second function block; generating a first code used for calling the extended capability in the second function block based on the first information; and storing the first description file and the first code in the first function block, the extended capability in the second function block being called when the first code is run. There is no need to copy a function code of another function block into a function block, thereby saving the storage space of the function block. In addition, when the called extended function changes or the code needs to be updated, there is no need to update the code of each function block one by one, thereby reducing the workload.

## Description

### TECHNICAL FIELD

The present invention relates to the technical field of workflows, and in particular, to a method and an apparatus for extending a capability of a function block, an electronic device, and a storage medium.

### BACKGROUND

A workflow may be simply defined as description of a series of operation processes. Workflows are widely applied to fields such as automated systems, artificial intelligence, and robotics. For example, a workflow of a product sorting line in an automated system may be simply described as starting, photographing, classifying, and moving a product to a target position. In the field of artificial intelligence, a model deployment workflow may be described as data collection, data annotation, model training, model deployment, and the like.

In a workflow canvas, a workflow usually includes a function block (FB). The function block may be defined by a public information model, and is used for packaging a special skill. The function block usually includes a relatively complex code, and is implemented by using knowledge of a particular field.

When a user expects to extend a capability of a function block or customize a skill of a function block, generally, a code of another function block is copied into a function block. First, the copied code inside the function block occupies the precious function block storage space. In addition, when the copied code needs to be updated (for example, the code has a defect), all function blocks copying the code need to correspondingly update the code, so the workload is increased.

### SUMMARY

Embodiments of the present invention provide a method and an apparatus for extending a capability of a function block, an electronic device, and a storage medium.

Provided is a method for extending a capability of a function block, including:
determining a first description file of a first function block, the first description file including first information, the first information being used for describing a calling relationship between the first function block and an extended capability in a second function block, and the extended capability including a basic capability of the second function block and an added capability of the second function block;
generating a first code used for calling the extended capability in the second function block based on the first information; and
storing the first description file and the first code in the first function block, the extended capability in the second function block being called when the first code is run.

Therefore, a function of another function block can be acquired without copying a code into a function block, thereby saving the storage space of the function block. In addition, when the called extended function changes or the code thereof needs to be updated, there is no need to update the code of each function block one by one, thereby reducing the workload.

In an embodiment, the first information includes a unique identifier of the second function block and a unique identifier of the added capability in the second function block.

Therefore, the added capability can be accurately positioned through respective unique identifiers of the second function block and the added capability.

In an embodiment, the method further includes:
determining a second description file of the second function block, the second description file including second information, and the second information being used for describing the added capability;
acquiring a second code used for implementing the added capability based on the second information; and
storing the second description file and the second code in the second function block.

Therefore, the added capability is described based on the second description file, and an implementation code for implementing the added capability can be conveniently stored in the second function block, so that another function block can call the added capability.

In an embodiment, the second information includes metadata of the second code and a storage address of the second code.

Therefore, the implementation code of the added capability can be conveniently acquired through the second information.

In an embodiment, the acquiring a second code used for implementing the added capability based on the second information includes:
acquiring the metadata from the second information;
acquiring the second code based on the storage address; and
associating the metadata with the second code.

Therefore, based on the second information, the implementation code of the added capability can be conveniently stored in the second function block.

In an embodiment, the first function block further includes a third code used for implementing a basic capability of the first function block. The method further includes:
running the first code and the third code based on a running order represented by first life cycle information, the running order including at least one of the following:
first running the first code to call the extended capability, and then running the third code to execute the basic capability of the first function block;
first running the third code to execute the basic capability of the first function block, and then running the first code to call the extended capability; and
running the third code to execute the basic capability of the first function block while running the first code to call the extended capability,
where the first life cycle information is contained in a main code of the first function block, and the main code further includes the third code; or
the first life cycle information is contained in the first description file.

Therefore, the first function block can execute multiple control logics, thereby enriching control scenarios.

In an embodiment, the second function block further includes a fourth code used for implementing the basic capability of the second function block. The method further includes:
running the second code and the fourth code based on a running order represented by second life cycle information, the running order including at least one of the following:
first running the fourth code to execute the basic capability of the second function block, and then running the second code to execute the added capability;
first running the second code to execute the added capability, and then running the fourth code to execute the basic capability of the second function block; and
running the fourth code to execute the basic capability of the second function block while running the second code to execute the added capability,
where the second life cycle information is contained in a main code of the second function block, and the main code further includes the fourth code;
or the second life cycle information is contained in the second description file.

Therefore, a function of the second function block can be called according to multiple control logics, thereby enriching control scenarios.

Provided is an apparatus for extending a capability of a function block, including:
a determination module, configured to determine a first description file of a first function block, the first description file including first information, the first information being used for describing a calling relationship between the first function block and an extended capability in a second function block, and the extended capability including a basic capability of the second function block and an added capability of the second function block;
a generation module, configured to generate a first code used for calling the extended capability in the second function block based on the first information; and
a calling module, configured to store the first description file and the first code in the first function block, the extended capability in the second function block being called when the first code is run.

Therefore, a function of another function block can be acquired without copying a code into a function block, thereby saving the storage space of the function block. In addition, when the called extended function changes or the code thereof needs to be updated, there is no need to update the code of each function block one by one, thereby reducing the workload.

In an embodiment, the determination module is configured to determine a second description file of the second function block, the second description file including second information, and the second information being used for describing the added capability;
the generation module is configured to acquire a second code used for implementing the added capability based on the second information; and
the calling module is configured to store the second description file and the second code in the second function block.

Therefore, the added capability is described based on the second description file, and an implementation code for implementing the added capability can be conveniently stored in the second function block, so that another function block can call the added capability.

In an embodiment, the first function block further includes a third code used for implementing a basic capability of the first function block. The apparatus further includes:
an execution module, configured to run the first code and the third code based on a running order represented by first life cycle information, the running order including at least one of the following:
first running the first code to call the extended capability, and then running the third code to execute the basic capability of the first function block;
first running the third code to execute the basic capability of the first function block, and then running the first code to call the extended capability; and
running the third code to execute the basic capability of the first function block while running the first code to call the extended capability,
where the first life cycle information is contained in a main code of the first function block, and the main code further includes the third code; or
the first life cycle information is contained in the first description file.

Therefore, the first function block can execute multiple control logics, thereby enriching control scenarios.

In an embodiment, the second function block further includes a fourth code used for implementing the basic capability of the second function block. The apparatus further includes:
an execution module, configured to run the second code and the fourth code based on a running order represented by second life cycle information, the running order including at least one of the following:
first running the fourth code to execute the basic capability of the second function block, and then running the second code to execute the added capability;
first running the second code to execute the added capability, and then running the fourth code to execute the basic capability of the second function block; and
running the fourth code to execute the basic capability of the second function block while running the second code to execute the added capability,
where the second life cycle information is contained in a main code of the second function block, and the main code further includes the fourth code;
or the second life cycle information is contained in the second description file.

Therefore, a function of the second function block can be called according to multiple control logics, thereby enriching control scenarios.

Provided is an electronic device, including:
a processor; and
a memory, configured to store an executable instruction of the processor, where
the processor is configured to read the executable instruction from the memory and execute the executable instruction to implement any one of the above methods for extending a capability of a function block.

Provided is a computer-readable storage medium, having a computer instruction stored thereon, where the computer instruction, when executed by a processor, implements any one of the above methods for extending a capability of a function block.

Provided is a computer program product, including a computer program, where the computer program, when executed by a processor, implements any one of the above methods for extending a capability of a function block.

### BRIEF DESCRIPTION OF THE DRAWINGS

To enable those of ordinary skill in the art to understand the above and other features and advantages of the present invention more clearly, preferred embodiments of the present invention are described in detail below with reference to the accompany drawings. In the accompanying drawings:
FIG. 1 is a flowchart of a method for extending a capability of a function block according to an embodiment of the present invention.
FIG. 2 is a schematic diagram showing a process of extending a capability of a function block according to an embodiment of the present invention.
FIG. 3 is a schematic diagram of a relationship between a function block providing an extended capability and a function block calling the extended capability according to an embodiment of the present invention.
FIG. 4 is a schematic diagram of executive function blocks in run time according to an embodiment of the present invention.
FIG. 5 is a schematic diagram of editing and sharing function blocks according to an embodiment of the present invention.
FIG. 6 is a structural diagram of an apparatus for extending a capability of a function block according to an embodiment of the present invention.
FIG. 7 is a structural diagram of an electronic device according to an embodiment of the present invention.

Reference numerals are as follows:

| Identification number | Meaning |
|---|---|
| 101-103 | Step |
| 10 | First function block |
| 11 | Code area |
| 12 | First description file |
| 13 | Unique identifier of second function block |
| 14 | Unique identifier of extended capability in second function block |
| 111 | Run-time communication device |
| 112 | Main code |
| 113 | Test method |
| 114 | First code |
| 121 | Function block metadata |
| 122 | Program language description |
| 123 | Port description information |
| 124 | First information |
| 20 | Second function block |
| 21 | Code area |
| 22 | Second description file |
| 23 | Metadata of second code |
| 24 | Storage address of second code |
| 211 | Run-time communication device |
| 212 | Main code |
| 213 | Test method |
| 214 | Second code |
| 221 | Function block metadata |
| 222 | Program language description |
| 223 | Port description |
| 224 | Second information |
| 30 | Run time |
| 31 | Interpreter |
| 32 | Dependency detection |
| 33 | Process management |
| 34 | Parameter transmission |
| 35 | Step control |
| 36 | File system |
| 37 | Function block unit |
| 60 | Public information model |
| 61 | Description file editor |
| 62 | Code generator |
| 63 | Editing function related to second function block |
| 64 | Editing function related to first function block |
| 70 | Function block management platform |
| 71 | Authentication |
| 72 | Function block retrieval |
| 600 | Apparatus for extending capability of function block |
| 601 | Determination module |
| 602 | Generation module |
| 603 | Calling module |
| 604 | Execution module |
| 700 | Electronic device |
| 701 | Processor |
| 702 | Memory |

### DETAILED DESCRIPTION

To make the objectives, technical solutions, and advantages of the present invention clearer, the present invention is further described in detail below with reference to embodiments.

For brief and intuitive description, the following illustrates the solutions of the present invention by describing several representative embodiments. Lots of details in the embodiments are only used to help understand the solutions of the present invention. However, obviously, the implementation of the technical solutions of the present invention may not be limited to these details. To avoid unnecessarily obscuring the solutions of the present invention, some embodiments are not described in detail, but only frameworks are provided. In the following description, "including" means "including but not limited to", and "according to ..." means "at least according to ..., but is not limited to only according to ...". Because of the Chinese language habit, when the number of a component is not particularly specified below, it means that the component may be one or more, or may be understood as at least one.

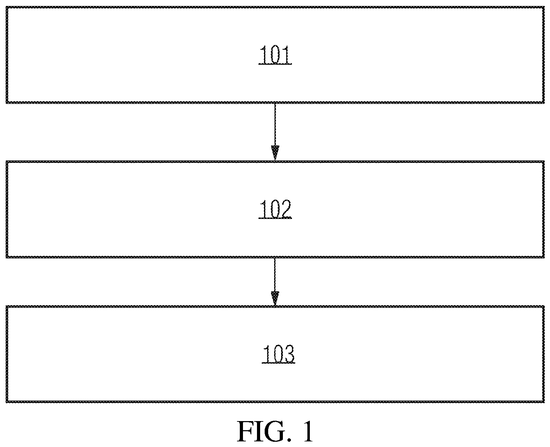

FIG. 1 is a flowchart of a method for extending a capability of a function block according to an embodiment of the present invention. As shown in FIG. 1, the method includes:
Step 101: A first description file of a first function block is determined, the first description file including first information, the first information being used for describing a calling relationship between the first function block and an extended capability in a second function block, and the extended capability including a basic capability of the second function block and an added capability of the second function block.

The first description file including the first information may be edited in a description file editor of a public information model. The first information describes a calling relationship between the first function block and the extended capability in the second function block, where the basic capability is an existing function contained in the second function block, and the added capability is a capability added to the second function block.

For example, assuming that the second function block is a function block configured to execute a database write operation, a basic function of the second function block is the database write operation. A new function may be added to the second function block: an operation of calculating a data average value. An extended function of the second function block is a combination operation of a database read operation and an operation of calculating a data average value. The specific implementation of the extended capability may include any combination of a basic capability and an added capability. For example, the extended capability may include any one of the following: (1) first executing the basic capability of the second function block, and then executing the added capability of the second function block; (2) first executing the added capability of the second function block, and then executing the basic capability of the second function block; and (3) simultaneously executing the added capability and the basic capability of the second function block.

In an embodiment, the first information includes a unique identifier of the second function block and a unique identifier of the added capability in the second function block. The first function block can generate a first code used for calling the extended capability in the second function block based on the first information. The first description file may further include other description information of the first function block, such as a front-end canvas, port description information, function block metadata, and program language description.

There may be multiple added capabilities in the second function block. Correspondingly, the first function block may also call multiple extended capabilities in the second function block. Therefore, there may be one or more pieces of first information contained in the first description file and used for describing respective calling relationships with respective extended capabilities in the second function block. In addition, a calling relationship with an extended capability of another function block other than the second function block may also be described in the first information. For example, a calling relationship with one or more extended capabilities in a third function block different from the second function block is further described in the first information, so as to further introduce an extended capability in the third function block to the first function block.

Step 102: A first code used for calling the extended capability in the second function block is generated based on the first information.

The code generator of the public information model parses the first description file to generate the first code used for calling the extended capability in the second function block.

For example, a unique identifier of the second function block and a unique identifier of an added capability in the second function block are extracted from the first information, and the first code used for calling the extended capability may be generated by using the two unique identifiers. After the first code is run, the second function block is positioned based on the unique identifier of the second function block (and therefore, the basic capability of the second function block can be accessed), and the added capability continues to be positioned in the second function block based on the unique identifier of the extended capability in the second function block (and therefore, the added capability of the second function block can be accessed), so that the extended capability including the basic capability and the added capability can be called.

Step 103: The first description file and the first code are stored in the first function block, the extended capability in the second function block being called when the first code is run.

Therefore, when the first function block is executed in run time, description information, such as a front-end canvas, port description information, function block metadata, and program language description, about the first function block may be acquired from the first description file as basic information for executing work, and the first code may further be executed to call the extended capability in the second function block.

In an embodiment, this embodiment of the present invention further includes a step of setting an added capability in the second function block. Specifically, an embodiment of the present invention further includes: a second description file of the second function block is determined, the second description file including second information, and the second information being used for describing the added capability; a second code used for implementing the added capability is acquired based on the second information; and the second description file and the second code are stored in the second function block.

Similarly, the second description file including the second information may be edited in the description file editor of the public information model. The second information describes the added capability contained in the second function block, and there may be one or more described added capabilities. The second description file may further include other description information of the second function block, such as a front-end canvas, port description information, function block metadata, and program language description.

In an embodiment, the second information includes metadata of the second code and a storage address of the second code. The code generator of the public information model parses the second description file to implement the added capability in the second function block. For example, the metadata is acquired from the second information; the second code is acquired based on the storage address; and the metadata is associated with the second code. For example, the metadata may include a name of an added function, description information of the added function, a parameter description of the added function, and the like.

In an embodiment, the first function block further includes a third code used for implementing a basic capability of the first function block. The first life cycle information is contained in the main code of the first function block, and the third code is contained in the main code of the first function block. Alternatively, the first life cycle information is contained in the first description file.

The running order represented by the first life cycle information may be obtained through parsing from the main code or the first description file. The method further includes: the first code and the third code are run based on a running order represented by first life cycle information, the running order including the following:
(1) First the first code is run to call the extended capability, and then the third code is run to execute the basic capability of the first function block.

For example, it is assumed that the basic capability of the first function block is a sorting operation. The extended capability of the second function block is that: data is first read from the database (the basic capability of the second function block), and then an average value of the read data is calculated (the added capability of the second function block). Then, the first code is first run to call the extended capability of the second function block, that is, the average value of the data is calculated after the data is read from the database by using the second function block. Then, the third code is run to execute the basic capability of the first function block, that is, sort the average value of the data.

(2) First the third code is run to execute the basic capability of the first function block, and then the first code is run to call the extended capability.

For example, it is assumed that the basic capability of the first function block is a sorting operation. The extended capability of the second function block is that: cleaning processing is first executed on the data (the basic capability of the second function block), and then the data is written into the database (the added capability of the second function block). First, the third code is run to sort the data by using the basic capability of the first function block. Then, the first code is run to call the extended capability of the second function block, that is, the sorted data is cleaned by using the basic function of the second function block, and then the cleaned data is written into the database by using the added function of the second function block.

(3) The third code is run to execute the basic capability of the first function block while running the first code to call the extended capability.

Herein, the extended capability and the basic capability of the first function block are executed simultaneously. For example, the two parallel tasks are executed simultaneously.

In an embodiment, the second function block further includes a fourth code used for implementing the basic capability of the second function block. The second life cycle information is contained in the main code of the second function block, and the fourth code is contained in the main code. Alternatively, the second life cycle information is contained in the second description file. The running order represented by the second life cycle information may be obtained through parsing from the main code or the second description file. The method further includes: the second code and the fourth code are run based on a running order represented by second life cycle information, the running order including the following:
(1) First the fourth code is run to execute the basic capability of the second function block, and then the second code is run to execute the added capability.

For example, it is assumed that the basic capability of the second function block is a sorting operation. The added capability of the second function block is: a data splicing operation. After the extended capability of the second function block is called by the first function block, at the second function block, the fourth code is first run to sort the data. Then, the second code is run to splice the sorted data. Finally, the spliced data is used as an execution result of calling, and is returned to the first function block.

(2) First the second code is run to execute the added capability, and then the fourth code is run to execute the basic capability of the second function block.

For example, it is assumed that the basic capability of the second function block is a sorting operation. The added capability of the second function block is: a data splicing operation. After the extended capability of the second function block is called by the first function block, at the second function block, the second code is first run to splice the data. Then, the fourth code is run to sort the spliced data. Finally, the sorted data is used as an execution result of calling, and is returned to the first function block.

(3) The fourth code is run to execute the basic capability of the second function block while running the second code to execute the added capability.

For example, it is assumed that the basic capability of the second function block is a sorting operation. The added capability of the second function block is: a data splicing operation. After the extended capability of the second function block is called by the first function block, at the second function block, the second code is run to splice the first data, and simultaneously, the fourth code is run to sort the second data. Finally, the sorted first data and the sorted second data are used as an execution result of calling, and are returned to the first function block.

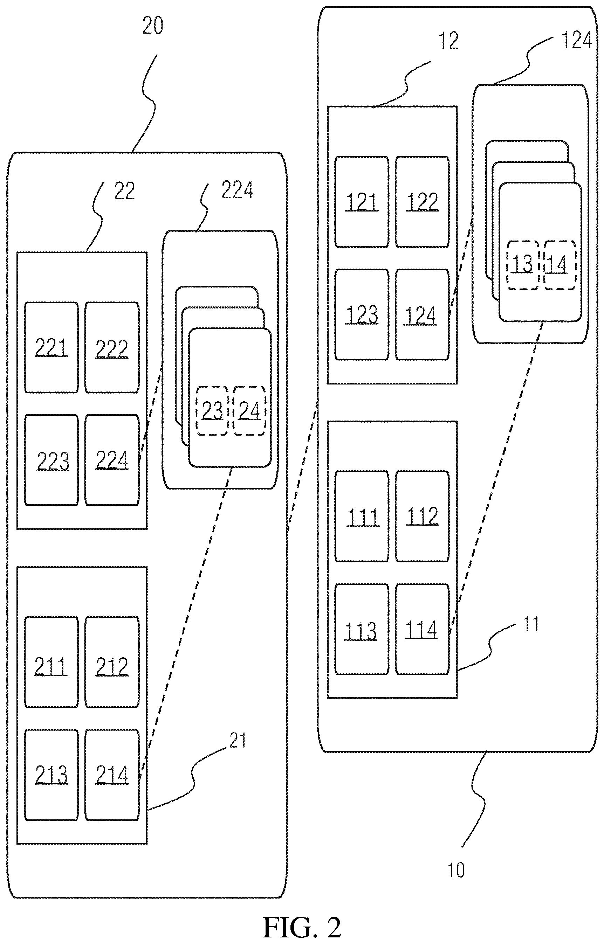

FIG. 2 is a schematic diagram showing a process of extending a capability of a function block according to an embodiment of the present invention. In FIG. 2, a second function block 20 has a basic function, and a new function is added to the second function block 20. The first function block 10 may call an extended function including a basic capability of the second function block 20 and an added capability of the second function block 20.

The second function block 20 includes a code area 21 and a second description file 22. The second description file 22 includes metadata 221, a program language description 222, a port description 223, and second information 224 of the second function block 20. The second information 224 is used for describing the added capability of the second function block 20, where there may be one or more added capabilities. The second information 224 includes metadata 23 (such as a name of an added function, description information of the added function, and a parameter description of the added function) of an implementation code (referred to as a second code) of each added capability, and a storage address 24 of each corresponding second code.

The code generator of the public information model parses the second description file 22, and acquires a storage address of the second code of each added capability and metadata of the second code based on the second information 224. The code generator acquires the second code based on the storage address; and associates the metadata with the second code, and stores the second code 214 of each added capability, associated with respective metadata, in the code area 21.

In addition to the second code 214, the code area 21 further includes a run-time communication device 211, a main code 212, and a test method 213. The main code 212 further includes a fourth code (not shown in the figure) used for executing the basic capability of the second function block 20. Second life cycle information that represents a running order of the second code 214 and the fourth code may be set in the main code 212. Alternatively, the second life cycle information is set in the second description file 22.

After the second code 214 is called by the first function block 10, the running order represented by the second life cycle information is parsed out from the main code 212 or the second description file 22, the second code 214 and the fourth code are run according to the running order, and a running result is returned to the first function block 10 as a calling result.

The first function block 10 includes a code area 11 and a first description file 12. The first description file 12 includes metadata 121, a program language description 122, a port description 123, and first information 124 of the first function block 10. The first information 124 is used for describing a calling relationship between the first function block 10 and an extended capability of the second function block 20. There may be one or more added capabilities in the second function block 20, and there may be one or more corresponding calling relationships. For each calling relationship, the first information 124 includes a unique identifier of the second function block 20 and a unique identifier of the corresponding added capability in the second function block 20.

The code generator in the public information model parses the first description file 12, generates a first code 114 used for calling the corresponding extended capability in the second function block 20 based on the first information 124, and stores the first code 114 in the code area 11.

In addition to the first code 114, the code area 11 further includes a run-time communication device 111, a main code 112, and a test method 113. The main code 112 may include a third code (not shown in the figure) used for executing the basic capability of the first function block 10. First life cycle information that represents a running order of the first code 114 and the third code may be set in the main code 112. Alternatively, the first life cycle information is set in the first description file 12.

The running order represented by the first life cycle information is parsed out from the main code 112 or the first description file 12, and the first code 114 and the third code are executed according to the running order. For example, after the first code 114 is run and the calling result provided by the second function block 20 is acquired, the third code is then run for the calling result. Alternatively, after the third code is run, the first code 114 is run to call the extended function of the second function block 20.

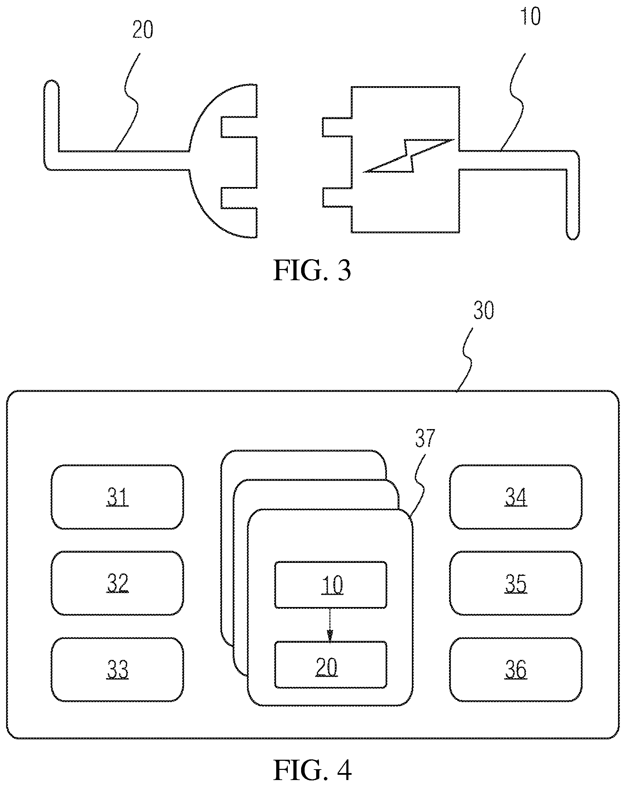

FIG. 3 is a schematic diagram of a relationship between a function block providing an extended capability and a function block calling the extended capability according to an embodiment of the present invention. As shown in FIG. 3, the second function block 20 and the first function block 10 are closely combined like a socket and a plug. The illustration in FIG. 3 is a schematic analogy for the purpose of elaboration, and is not used to limit this embodiment of the present invention.

FIG. 4 is a schematic diagram of executive function blocks in run time according to an embodiment of the present invention. The run time environment includes: an interpreter 31, dependency detection 32, process management 33, parameter transmission 34, step control 35, and a file system 36. For each function block unit 37, the second function block 20 may be implemented to call an extended function in the first function block 10.

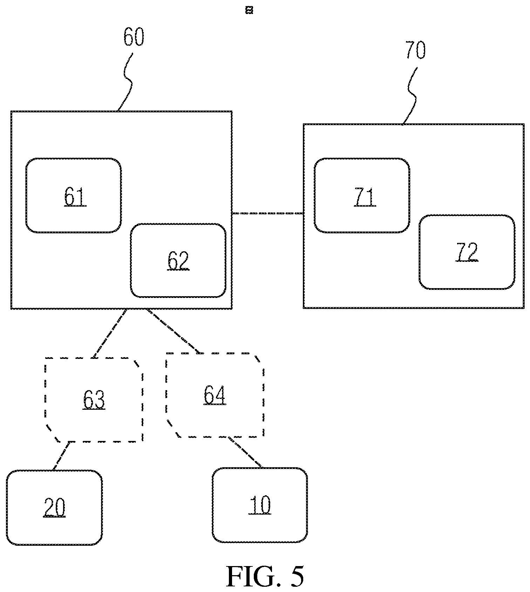

FIG. 5 is a schematic diagram of editing and sharing function blocks according to an embodiment of the present invention.

As shown in FIG. 5, in a description file editor 61 of a public information model 60, a description file of a function block is edited.

For example, for a first function block 10 needing to call an extended function in a second function block 20, a calling relationship between the first function block 10 and an extended capability in the second function block 20 is edited and described in a description file of the first function block. For the second function block 20 having the called function, an added capability is described in a description file of the second function block.

In addition, the code of each function block is generated based on a code generator 62. For example, in the first function block 10, a first code for calling the extended capability in the second function block 20 is generated. In the second function block 10, a second code for implementing the added capability is generated.

Therefore, an editing function 64 related to the first function block 10 includes: editing and describing the calling relationship between the first function block 10 and the extended capability in the second function block 20, and generating the first code for calling the extended capability in the second function block 20. An editing function 63 related to the second function block includes: describing the added capability in the description file of the second function block 20, and generating the second code for implementing the added capability in the second function block 20.

The first function 10 and the second function 20 may be stored and presented in a function block management platform 70. The function block management platform 70 may further improve authentication 71 and function block retrieval 72. For example, the function block management platform 70 may be a local platform or a remote platform located in the cloud.

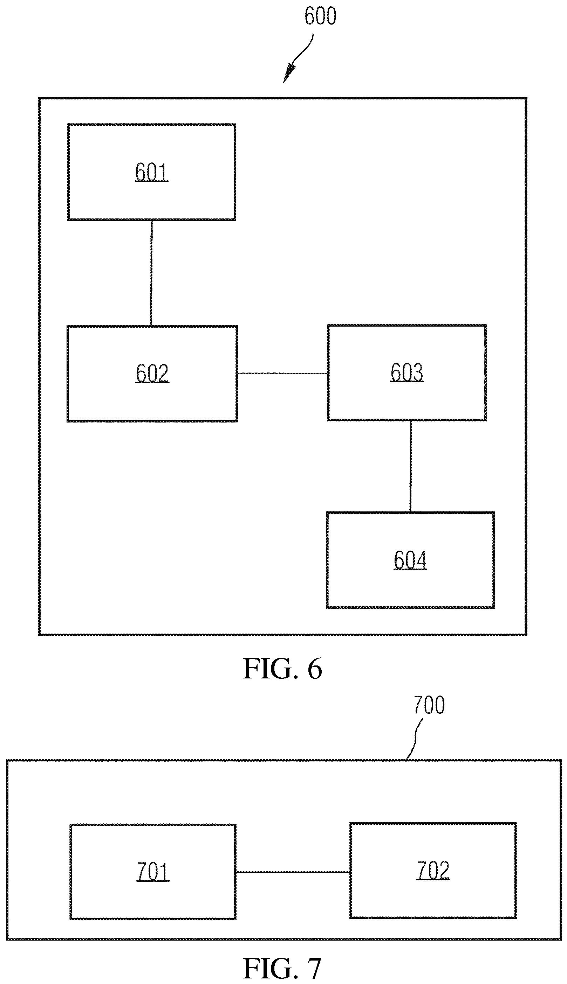

FIG. 6 is a structural diagram of an apparatus for extending a capability of a function block according to an embodiment of the present invention. As shown in FIG. 6, an apparatus 600 for extending a capability of a function block includes:
a determination module 601, configured to determine a first description file of a first function block, the first description file including first information, and the first information being used for describing a calling relationship between the first function block and an extended capability in a second function block;
a generation module 602, configured to generate a first code used for calling the extended capability in the second function block based on the first information; and
a calling module 603, configured to store the first description file and the first code in the first function block, the extended capability in the second function block being called when the first code is run.

In an embodiment, the first information includes a unique identifier of the second function block and a unique identifier of the added capability in the second function block. In an embodiment, the second information includes metadata of the second code and a storage address of the second code. In an embodiment, the step of acquiring a second code used for implementing the added capability based on the second information includes: the metadata is acquired from the second information; the second code is acquired based on the storage address; and the metadata is associated with the second code.

In an embodiment, the determination module 601 is configured to determine a second description file of the second function block, the second description file including second information, and the second information being used for describing the extended capability; the generation module 602 is configured to acquire a second code used for implementing the extended capability based on the second information; and the calling module 603 is configured to store the second description file and the second code in the second function block.

In an embodiment, the first function block further includes a third code used for implementing a basic capability of the first function block. The apparatus further includes: an execution module 604, configured to execute the first code and the third code based on a running order represented by first life cycle information, the running order including at least one of the following: first running the first code to call the extended capability, and then running the third code to execute the basic capability of the first function block; first running the third code to execute the basic capability of the first function block, and then running the first code to call the extended capability; and running the third code to execute the basic capability of the first function block while running the first code to call the extended capability, where the first life cycle information is contained in a main code of the first function block, and the main code further includes the third code; or the first life cycle information is contained in the first description file.

In an embodiment, the second function block further includes a fourth code used for implementing the basic capability of the second function block. The apparatus further includes: an execution module 604, configured to run the second code and the fourth code based on a running order represented by second life cycle information, the running order including at least one of the following: first running the fourth code to execute the basic capability of the second function block, and then running the second code to execute the added capability; first running the second code to execute the added capability, and then running the fourth code to execute the basic capability of the second function block; and running the fourth code to execute the basic capability of the second function block while running the second code to execute the added capability, where the second life cycle information is contained in a main code of the second function block, and the main code further includes the fourth code; or the second life cycle information is contained in the second description file.

An embodiment of the present invention further provides an electronic device with a processor-memory architecture. FIG. 7 is a structural diagram of an electronic device according to an embodiment of the present invention.

As shown in FIG. 7, an electronic device 700 includes a processor 701, a memory 702, and a computer program which is stored in the memory 702 and can be run on the processor 701. When the computer program is executed by the processor 701, any one of the above methods for extending a capability of a function block is implemented. The memory 702 may be specifically implemented as various storage media such as an electrically erasable programmable read-only memory (EEPROM), a flash memory, and a programmable read-only memory (PROM). The processor 701 may be implemented to include one or more central processing units or one or more field programmable gate arrays, where the field programmable gate array integrates one or more central processing unit cores. Specifically, the central processing unit or the central processing unit core may be implemented as a CPU, an MCU, a DSP, or the like.

It should be noted that not all steps and modules in the above processes and structural diagrams are necessary, and some steps or modules may be omitted according to actual needs. An execution logic of each step is not fixed and may be adjusted according to needs. Division of the modules is merely functional division for ease of description. During actual implementation, one module may be separately implemented by multiple modules, and functions of multiple modules may also be implemented by a same module. These modules may be located in a same device, or may be located in different devices.

Hardware modules in each embodiment may be implemented mechanically or electrically. For example, a hardware module may include a specially designed permanent circuit or logic device (e.g., a dedicated processor, such as an FPGA or an ASIC) to complete a specific operation. The hardware module may also include a programmable logic device or circuit (for example, including a general-purpose processor or another programmable processor) configured temporarily by software and configured to execute a specific operation. The specific implementation of the hardware module may be determined according to cost and time considerations by a mechanical manner, a dedicated permanent circuit, or a temporarily configured circuit (for example, configured by software).

The embodiments described above are merely preferred embodiments of the present invention, and are not intended to limit the protection scope of the present invention. Any modification, equivalent replacement, or improvement made within the spirit and principle of the present invention shall fall within the protection scope of the present invention.

## Claims

1. A method for extending a capability of a function block, comprising:
(101) determining a first description file of a first function block, the first description file comprising first information, the first information being used for describing a calling relationship between the first function block and an extended capability in a second function block, and the extended capability comprising a basic capability of the second function block and an added capability of the second function block;
(102) generating a first code used for calling the extended capability in the second function block based on the first information; and
(103) storing the first description file and the first code in the first function block, the extended capability in the second function block being called when the first code is run.

2. The method according to claim 1, wherein the first information comprises a unique identifier of the second function block and a unique identifier of the added capability in the second function block.

3. The method according to claim 1, further comprising:
determining a second description file of the second function block, the second description file comprising second information, and the second information being used for describing the added capability;
acquiring a second code used for implementing the added capability based on the second information; and
storing the second description file and the second code in the second function block.

4. The method according to claim 3, wherein the second information comprises metadata of the second code and a storage address of the second code.

5. The method according to claim 4, wherein the acquiring a second code used for implementing the added capability based on the second information comprises:
acquiring the metadata from the second information;
acquiring the second code based on the storage address; and
associating the metadata with the second code.

6. The method according to any one of claims 1 to 5, wherein the first function block further comprises a third code used for implementing a basic capability of the first function block; and the method further comprises:
running the first code and the third code based on a running order represented by first life cycle information, the running order comprising at least one of the following:
first running the first code to call the extended capability, and then running the third code to execute the basic capability of the first function block;
first running the third code to execute the basic capability of the first function block, and then running the first code to call the extended capability; and
running the third code to execute the basic capability of the first function block while running the first code to call the extended capability,
wherein the first life cycle information is contained in a main code of the first function block, and the main code further comprises the third code; or
the first life cycle information is contained in the first description file.

7. The method according to any one of claims 1 to 5, wherein the second function block further comprises a fourth code used for implementing the basic capability of the second function block; and the method further comprises:
running the second code and the fourth code based on a running order represented by second life cycle information, the running order comprising at least one of the following:
first running the fourth code to execute the basic capability of the second function block, and then running the second code to execute the added capability;
first running the second code to execute the added capability, and then running the fourth code to execute the basic capability of the second function block; and
running the fourth code to execute the basic capability of the second function block while running the second code to execute the added capability,
wherein the second life cycle information is contained in a main code of the second function block, and the main code further comprises the fourth code;
or the second life cycle information is contained in the second description file.

8. An apparatus for extending a capability of a function block, comprising:
a determination module (601), configured to determine a first description file of a first function block, the first description file comprising first information, the first information being used for describing a calling relationship between the first function block and an extended capability in a second function block, and the extended capability comprising a basic capability of the second function block and an added capability of the second function block;
a generation module (602), configured to generate a first code used for calling the extended capability in the second function block based on the first information; and
a calling module (603), configured to store the first description file and the first code in the first function block, the extended capability in the second function block being called when the first code is run.

9. The apparatus according to claim 8, wherein
the determination module (601) is configured to determine a second description file of the second function block, the second description file comprising second information, and the second information being used for describing the added capability;
the generation module (602) is configured to acquire a second code used for implementing the added capability based on the second information; and
the calling module (603) is configured to store the second description file and the second code in the second function block.

10. The apparatus according to claim 8 or 9, wherein the first function block further comprises a third code used for implementing a basic capability of the first function block; and the apparatus further comprises:
an execution module (604), configured to run the first code and the third code based on a running order represented by first life cycle information, the running order comprising at least one of the following:
first running the first code to call the extended capability, and then running the third code to execute the basic capability of the first function block;
first running the third code to execute the basic capability of the first function block, and then running the first code to call the extended capability; and
running the third code to execute the basic capability of the first function block while running the first code to call the extended capability,
wherein the first life cycle information is contained in a main code of the first function block, and the main code further comprises the third code; or
the first life cycle information is contained in the first description file.

11. The apparatus according to claim 8 or 9, wherein the second function block further comprises a fourth code used for implementing the basic capability of the second function block; and the apparatus further comprises:
an execution module (604), configured to run the second code and the fourth code based on a running order represented by second life cycle information, the running order comprising at least one of the following:
first running the fourth code to execute the basic capability of the second function block, and then running the second code to execute the added capability;
first running the second code to execute the added capability, and then running the fourth code to execute the basic capability of the second function block; and
running the fourth code to execute the basic capability of the second function block while running the second code to execute the added capability,
wherein the second life cycle information is contained in a main code of the second function block, and the main code further comprises the fourth code;
or the second life cycle information is contained in the second description file.

12. An electronic device, comprising:
a processor (701); and
a memory (702), configured to store an executable instruction of the processor (701), wherein
the processor (701) is configured to read the executable instruction from the memory (702) and execute the executable instruction to implement the method for extending a capability of a function block according to any one of claims 1 to 7.

13. A computer-readable storage medium, having a computer instruction stored thereon, wherein the computer instruction, when executed by a processor, implements the method for extending a capability of a function block according to any one of claims 1 to 7.

14. A computer program product, comprising a computer program, wherein the computer program, when executed by a processor, implements the method for extending a capability of a function block according to any one of claims 1 to 7.
